# EUROPEAN PATENT APPLICATION

(11) **EP 1 471 486 A2**
(43) Date of publication of application: **27.10.2004**
(21) Application number: 04001194.2
(22) Date of filing: 21.01.2004
(51) Int. Cl.: G09C 1/00

(54) **Time based encryption algorithm**

(30) Priority: 31.01.2003 MY 0300377
(71) Applicant: Jiraki, Khalil, Rasam Jay 70300, Seremban (MY)
(72) Inventor: Jiraki, Khalil, Rasam Jay 70300, Seremban (MY)
(74) Representative: Hainz, Miloslav, Dipl.-Ing.

(57) **Abstract**

Disclosed is a new encryption algorithm that can be implemented using either software alone, hardware alone or a combination of both. The algorithm uses time based logic to be interfaced with computer electronic codes such as the Binary code to encrypt and decrypt data and files. The algorithm uses time and individual bits to code characters. The bits in a byte are separated into individual bits and time intervals are inserted between them. Thus, the data will be coded as bit-Time Interval-bit. This code will be referred to as the Timary code. This algorithm can be used with other encryption systems.

## Description

### BACKGROUND OF THE INVENTION

Encryption is a process that allows private communications between a sender and a receiver to remain private. It also ensures that private data remain inaccessible to intruders. It does this by disguising the actual data form and its originator.

Today, encryption involves scrambling data and using a key to access it. The key is an algorithm, a detailed mathematical procedure generating a number sequence within a specific amount of bits. The sequence allows access to the message which may have more than one layer of encryption thereby requiring more than one key.

The era of computers and electronics gave an unprecedented freedom for cipher designers to use elaborate designs which would be too prone to error if handled by pencil and paper. In general, cryptographic systems are grouped according to three features:
1. The mathematical operation that changes the plaintext into the ciphertext using the encryption key.
2. Whether a block or a stream cipher is produced.
3. The type of key system used - single or two key.

### Single key Ciphers used in Cryptography:

### 1. Substitution Ciphers

A substitution cipher is one in which the units of the plaintext (usually letters or numbers) are replaced with other symbols or groups of symbols. The actual order of the units of the plaintext is not changed.

The simplest substitution cipher is one where the alphabet of the cipher is merely a shift of the plaintext alphabet, for example, "A" might be encrypted as B, C or D and so forth. These substitution ciphers are not secure because individual letter frequencies are left completely intact.

Two approaches have been used with to reduce the extent of the letter frequencies and to change the main structure of the text. One of these is to treat more than a single letter as one element i.e. two or three successive letters are treated as one unit. The other method is to use several different cipher alphabets.

The other approach is to concealing the original plaintext structure by using several different substitution ciphers for the same character. The resulting ciphers, known as polyalphabetics, have a long history of usage.

### 2. Block Ciphers

A block cipher is a type of symmetric-key encryption algorithm that changes a fixed-length block of the plaintext into the same length of ciphertext. The encryption works by means of a key. Decryption is simply the reverse of the encryption process using the same secret key. The fixed length is called the block size. Since different plaintext blocks are mapped to different ciphertext blocks, a block cipher effectively provides a permutation of the set of all possible messages.

An iterated block cipher encrypts a plaintext block using a process with several stages (rounds). At each stage the same process is applied to the data using a subkey (subkeys are derived from a user provided key). The number of rounds in an iterated block cipher depends on the desired security level but more rounds require more processing time. For a high level of security the number of rounds will be too large for the cipher to be practical.

### 3. Stream Ciphers

A stream cipher also breaks the plaintext into units, this time it is normally a single character. It then encrypts the n^{th} unit of the plaintext with the n^{th} unit of the key stream. Stream ciphers are much faster than block ciphers. While the encryption of any particular plaintext with a block cipher will result in the same ciphertext when the same key is used; with a stream cipher, the transformation of the smaller plaintext units will vary, depending on when they are encountered during the encryption process.

### 4. Data Encryption Standard (DES)

DES is the most well known and widely used symmetric algorithm in the world. DES has a 64-bit block size and uses a 56-bit key during encryption. It is 16-round cipher and was originally designed for implementation in hardware. Because it is a single-key cryptosystem, when used for communication both sender and receiver must know the same secret key which can be used to encrypt or decrypt the message.

There is no feasible way to "break" DES other than an exhaustive search a process which takes 2⁵⁵ steps on average. However, cryptanalysis methods which rely on knowledge of some of the plaintext have had some success. The consensus is that DES is not secure.

### Public Key Cryptography

If the encryption process is undertaken with the same key as the decryption process and only the sender and the receiver possess the secret key, then this can cause problems such as the key distribution problem. This occurs because both the sender and receiver must hold a copy of the key, but they must also prevent others from gaining a copy of the key. To do so, the sender and receiver must meet in person to decide upon the key.

This key can not be shared with a third individual since he may corrupt the key. So a new key to communicate with a third party is made and is shared by the three individuals only. As more persons are included in the circle, the number of keys becomes very large.

A solution to the key distribution problem can be found in public key, or two-key, cryptography. With Public Key cryptography a user can possess two keys - one public and one private key. The public key can only be used to encrypt data and the private key can only be used to decrypt it. The fact that all users can use a single "locking" key to encrypt a message means that the number of keys required can be greatly reduced. However, the receiver can not tell the identity of the sender because all involved parties encrypt using same key. Therefore with a public key system, the ability to authenticate messages has been given up in return for privacy.

An alternative is to keep the public key secret and give out the private key. The sender could then encrypt using the public key and so the receiver is certain about who sent the message. However, all members can decrypt the message. In this example, secrecy has been sacrificed in order to maintain an ability to authenticate the message.

The problem can be solved by combining the two methods outlined above. If each user had two sets of public and private keys and distributed one key from each set then the capability to authenticate messages and to keep them secret would be maintained.

For two-key cryptography to be possible a cryptosystem must have the following properties:
1. It must be easy for the cryptographer to calculate a pair of keys (private and public) but virtually impossible for a cryptanalyst to recover either key, regardless of how much ciphertext is available.
2. The encryption and decryption operations should be easy (computationally speaking) for legitimate users to carry out.
3. At least one of the keys must be virtually impossible for the cryptanalyst to recover even when he knows the other key and many matching plaintext and ciphertext pairs.

At present no cryptosystem ever devised has satisfied all of these conditions in a proven way. However, cryptographers have devised cryptosystems of this sort by starting with a difficult mathematical problem such as factoring a product of large prime numbers and attempting to make the cryptanalysis be equivalent to solving the problem. If this can be done then the security of the scheme is at least as good as the underlying problem is hard to solve.

There are a number of mathematical problems that are commonly used as the basis for public key cryptosystems.

### RSA Algorithm

In this system a user chooses a pair of prime numbers so large that factoring the product is beyond all computing capabilities. This is possible because testing for primes is easy whereas factoring the product is very difficult. Recently, mathematicians have come up with easier ways to factor numbers. Also increases in computer power keep eroding at the security of RSA keys by making factoring faster.

### Cryptography Technical Issues

The time to crack the best symmetric cryptosystem is an exponential function of the key size. This means that small increases in key size have very large time consequences for the attacker. However, the hardware and software complexities of implementing and running these algorithms increase for the user.

As the keys become more complex, it is very hard to memorize them and to keep tract of them and they should be written down or put on a special disk. For absolute security, each message or communication has to have a separate key. This is the rule for extremely secure lines such as the "red phone" communications between the White House and the Kremlin and between USA and its nuclear submarines. In such instances, the keys are transferred to transportable media which pauses some risks if the transport medium falls in the wrong hands.

Another problem is inherent to using computers. A common feature of software is the large time cost to consumers using it. First, one must learn how to use a particular software package. Even if one only wants to use it occasionally, one has to read the documentation, practice a bit, and invest time and energy in learning the basics of how to use the package. When the software is too complex and hard to use, it is more likely that users will not be able to use the software properly and will know little about it. This human factor is one of the main reasons why security systems fail.

Another constraint comes from the desire for novelty over usability and security. This trend maximizes the profit of encryption makers. Software developers care more about their convenience and welfare than that of users. The industry has a vested interest in keeping customers seeking steady upgrades and bug fixes.

### Future Developments

Within a matter of a few decades computers many more times powerful than those available today will be in use. These more powerful processors will allow more complicated encryption algorithms to be run within a reasonable time span. This will inevitably lead to the steadily increasing power of encryption systems.

The same computing power which makes these computers useful to cryptographers will make them useful to cryptanalysts. With computers hundreds of times more powerful it will become plausible to decrypt many ciphers by a simple brute force attack where it had not been so before. This will probably spell the end of existing cryptosystems, however, other, more complicated ones will be developed in their place.

### DISCLOSURE OF THE INVENTION

The invention provides a new method for encryption that can be easily implemented using computers. The algorithm works at the computer bit level. It reads the byte in either direction, determines the number of bits and assigns time interval values to be inserted between the bits. In an eight bit byte, seven such values will be assigned. Then the byte is split it into its individual bits keeping the order of the bits intact. The time intervals chosen are then inserted between the bits.

The first time interval will be inserted between bit one and two. The time intervals between two consecutive ones are added and then the byte is stored in the form of "one" bits only dropping the zero bits out of the code. The byte can be reconstituted if the values for time intervals between the original bits are known.

In its preferred embodiment, the algorithm should be implemented using hardware and software. This will provide maximum security for the user.

The advantages of the new system are:
- By just setting the time dials or plugging-in the time intervals, the user can encode. This easy to use system helps promote security by avoiding large cumbersome passwords.
- All the user has to do is choose a series of numbers. The software can randomly choose the numbers for him.
- Data will be transmitted in a customized mode rather than standard protocol applicable to all users, thus avoiding common hackers.
- Data will be protected from internal users as well as external users.
- In this system, encryption codes or passwords are numbers and can be easily memorized or changed periodically according to a preset formula that also can be memorized.
- If mechanical dials are used, any intruder into the computer system can not have access to the code. The usual methods of breaking into computers will not be applicable in this system.
- The fax can be used safely for transmitting data and so avoiding the internet and its threats and benefiting from ease of use of fax machines.
- Data will not be retrievable without the presence of both hardware and software.
- Data will be secure against the new generation of hacking programs such as the Keystroke Detector.
- Synchronizing the sender and receiver timing systems is needed and this adds another layer of security.
- The time interval values can be real time, electronic circuit time or virtual time. This adds another level of security to the encoded text.
- The underlying language used in the text and the text format are obscured. This adds another means of protection for the data.
- Since the user determines the code and not a mathematical formula, a cryptoanalyst cannot transfer his experience from one user to another.
- Each document can have its own code.
- Any text can be handled as one large byte stored or transmitted as a series of one bits separated by certain time intervals.
- Non-sense series of one bits can be inserted before and/or after the actual data. Also such non-sense bits can be inserted before and after any coded byte. This adds to the security of the encoded data.
- Assume that the Time Interval values range from zero to 100 units, the probability to break the code is one in 7 x 10¹⁰⁰ or one in 10⁸⁴. If the value of the Time Interval is increased up to 1000 units, the probability will be much higher (10⁸⁴⁰). Also if the number of bytes coding a character is more than 8, then the probability against breaking the code will also be much higher.
- The new algorithm allows users to periodically change numbers based on a certain agreeable formula such as adding one to each value each day. Even the values of the time intervals can follow an easy formula.
- Most crypto systems use the same formula and device for all customers. Using this algorithm, each customer will have his own "formula" and can his own specifications for his device. The customer can change his formula whenever he likes.

### DETAILED DESCRIPTION OF THE INVENTION

The new encryption code depends mainly on time intervals to code data. At one extreme, the bit "0" is dropped out completely from the Binary Code or similar codes and the data will be represented using only the "1" bits in conjunction with time intervals inserted between the bits. Using this "1" bit alone in combination with time, any character can be coded. Terminology used in this text is to elucidate the idea and not to limit the scope of the invention.

For example: for eight bit bytes such as this byte 1-0-1-0-0-1-0-1 we can assign seven Time Intervals between the bits. These intervals will be designated letter values for later reference (a, b, c, d, e, f, g) with corresponding Time Intervals in nanoseconds (ns) as an example of a time frame: a = 5 ns, b = 7 ns, c = 8 ns, d = 3 ns , e = 3 ns , f = 9ns, and
g = 2 ns, from left to right. The value of "a" for example is 5 nanoseconds and "b" is 7 nanoseconds etc. The bite is read from left to right or right to left depending on the choice of the user. Then the bits are stored (or transmitted) one after the other in a timely fashion.

We start at time zero by storing (or transmitting) the first bit ("1") followed at time a = 5 ns by the second bit ("0") and then followed at time b = 7 ns by third bit ("1") and so on. Our byte is now handled in the following manner:
**1** - 5 ns - **0** - 7 ns - **1** - 8 ns - **0** - 3 ns - **0** - 3 ns - **1** - 9 ns - **0** - 2 ns - **1**

We start by extracting the ones from the byte. In this process we ignore the zeros but the time intervals between the each zero and other bits is not ignored. The time intervals between the ones are added together and the zeros are removed. Now there is a new representation of the original byte:
**1** - 12 ns - **1** - 14 ns - **1** - 11 ns - **1**
where 12 is the sum of 5 and 7, 14 is the sum of 8, 3, 3 and 11 is the sum of 9 and 2.

The original byte is then stored or transmitted as 1-1-1-1, with different Time Intervals between each "1" bit. The final byte code will be as such:
"1" 12 ns "1" 14 ns "1" 11 ns "1"
By introducing the time element between the bits, we get a new code that blends time with the Binary code or similar computer codes. We shall call this code the **Timary Code**.

For the purpose of coding, only the Time Intervals and the "1" bits are stored or transmitted. The zeros can be dropped completely from the Binary code or used in a manner that is not related to the original Binary code. The data is then stored as 1-1-1-1-1-1-1-1 separated by Time Intervals or in the form of 1-0-1-0-1-0-1-0-1 and so on. In the latter case, the zero bit can act as a comma between the bits and is not part of the code itself. Before decoding, these zeros can be removed.

Our byte is de-coded by reversing the sequence of coding. If our data is stored on an appropriate device that can handle the Timary Code such as a magnetic tape running at a constant rate, the user fills into the decoder device or program the same Time Intervals assigned to a, b, c, d, e, f, and g when the text was coded. The decoder "gate" opens only at these intervals.

Note that our byte is stored as such:
**1** 12 ns **1** 14 ns **1** 11 ns **1**.

At time zero, the decoder gate "opens" and loads the first bit "1" and then at 5 nanoseconds ( a =5 ns) the decoder gate opens but no bit is sent from storage and so a "0" is loaded. We then have 1-0. At 7 nanoseconds (b =7 ns) later, the decoder gate opens and a "1" is received which is added to the other two bits and we get 1-0-1. At 8 nanoseconds ( c=8 ns) later, the gate opens and a "0" is received. There is now 1-0-1-0. Repeating the process for the other time intervals will yield the original byte
1-0-1-0-0-1-0-1.

The Timary Code can be integrated with the Binary Code by having a computer device (hardware and software) that extracts the ones in the Binary Code and assigns the values of the time intervals between the consecutive bits.

The advantage of the Timary code is that each individual user can assign a specific time for the Time Intervals between the Binary Code bits. Thus the information coded in the user's document can be accessed only by those who know the same Time Interval values, otherwise, the data can not be de-coded.

If in the example above, 1-0-1-0-0-1-0-1 the Time Intervals used are different from the original such as a= 6, and b=3, then the data will be meaningless when decoded. The decoder opens its gate at time zero and loads a "1" then at time 6 ns it opens to receive another bit. When none is found, a "0" is loaded. After 3 ns (b=3), the decoder opens its gate and no bit is received (since the following bit comes at 12 ns after the first one). It then assigns a second zero to the byte and we have then 1-0-0. Already the decoded byte is wrong. With numerous bytes, it will be impossible to decode Timary data without knowing the values of the time intervals.

If an intruder opens his decoder gate all the time, he will receive 1-1-1-1. The bits will be separated by the appropriate Time Intervals. This is the original coded message and he can not make any sense out of it. Also the user assigns the order in which the byte is coded, a piece of information unavailable to the intruder.

The purpose of the **Timary** code is to encrypt data in an easy and secure way. The user assigns the value of the Time Intervals and then the bit extractor will code the data. The message is stored in a special Timary storage system. For the information to be retrieved, the end user has to know the exact Time Intervals used in the initial coding. He assigns these values to his bit extractor and then the information can be decoded properly.

Note that two communicating stations or modems have to be synchronized before being able to communicate or de-code the data. This adds another layer of protection to the security of the encryption. An intruder can not decode the data unless his computer is synchronized with that of the sender even if he knew the values of the Time Intervals. A special synchronizing device or method can be added to the system.

The zero bits can be re-inserted inside the encrypted message and can be discarded before the encryption phase starts. Also the zero bits can be coupled to the one bits in transmission of data for timing the signal. Since communication lines may carry a voltage at all times, the zero bit will interrupt the voltage of the line to create a timed signal. Although the zero bit introduction back into the code may not confer higher security, it can add to the stability of the encrypted electronic signal.

Nonsense one bits with intervening time intervals can be inserted before or after the encrypted text. The user can determine how many ones and the random time intervals to be used. Also a similar procedure can be done before or after each byte. The algorithm ignores these nonsense ones and then decrypt the data. Information about these nonsense bits should be available to the person decoding the message.

The code comprised of the time intervals can be changed in the same document to further protect it. The algorithm can encrypt a certain number of bytes and then the user can change the time intervals in the same document. Each set of bytes will have its time intervals and so its own code. Decoding will be done in the same manner.

## Claims

1. Crypto Algorithm that can be implemented using Crypto Software, Crypto Hardware or both to encrypt and decrypt data and files.

2. Crypto algorithm that uses timing of signals to encrypt electronic computer codes such as "0,1" Binary code having any number of bits.

3. Crypto algorithm that uses a timing of signals and the computer bits to encrypt data.

4. Crypto Algorithm that performs the following functions:
a. splits bytes into individual bits.
b. designates Time Intervals for encrypting computer bytes.
c. assigns the appropriate number of time intervals for every byte.
d. arranges the time intervals in a specific order.
e. assigns numerical values for the Time Intervals.
f. inserts Time Intervals in between the computer bits.
g. adds Time Intervals between two consecutive "one" bits.
h. drops the zero bits out of the electronic "0,1" codes.
i. codes data in the format of: bit (one)-Time Interval ―bit (one).
j . can re-insert zero bits into the encoded data without interfering with the coding process.
k. can decode data coded in the form of bit (1)-Time Interval-bit(1).
l. can insert "nonsense" one bits with intervening Time Intervals before and/or after each encrypted byte, word, set of words.

5. Crypto Algorithm that allows the data to be stored, transmitted, processed, etc using the bit (one)-Time Interval ―bit (one).

6. Crypto algorithm that uses real time intervals, electronic cycles each assigned an arbitrary time value or software virtual time.

7. Any other techniques that might be obtained through the idea of Signal Timing to encrypt data,
